# EUROPEAN PATENT APPLICATION

(11) **EP 1 244 268 A2**
(43) Date of publication of application: **25.09.2002**
(21) Application number: 01307034.7
(22) Date of filing: 17.08.2001
(51) Int. Cl.: H04L 29/06

(54) **Method and apparatus for applying information through a firewall**

(30) Priority: 28.02.2001 SG 200101251
(71) Applicant: Hewlett-Packard Company, Palo Alto, CA 94304 (US)
(72) Inventor: Gomes, John Isaac Chandan, Singapore 449031 (SG); Tan, Ngee Chuan, Singapore 588195 (SG)
(74) Representative: Jehan, Robert

(57) **Abstract**

In a system for applying information stored remotely to an appliance via a mobile device (100) the mobile device (100) initiates the process by transmitting instructions to a computer system (102, 124, 106, 116) via a communication network. The instructions designate the information to be processed as well as the appliance (104, 110, 112) which the information is to be applied. According to the instructions, the computer system (116) retrieves the information and converts the information to a document suitable for the appliance (104, 110, 112). The computer system then applies the document to the designated appliance (104, 110, 112).

## Description

This invention relates to a method and an apparatus for applying remotely stored information via a mobile device.

Conventionally, after editing and formatting a document by using his computer application, getting an email with or without attachment, or browsing a website, a user can apply the information to an appliance. For example, the user can generate a hard copy of it by sending the information from the computer to an appliance, such as a printer connected to the computer directly or via a network, or as a fax machine. The user can also send the information to a projector for displaying it. When the user is traveling, however, he has to carry the edited document in a portable media or a laptop for accessing and processing it. He may also need the laptop for retrieving emails or surfing the internet. If he wants a printed version of the document, the email, the attachment, and so on, or if he wants to project it, he has to connect the laptop to an appropriate appliance, and quite often, to install the appliance. These may not be desirable, especially for a user who travels often.

With the advent of mobile revolution, mobile devices such as mobile phones and personal digital assistants provide a solution to access information or data remotely. Some devices even allow the user to store some information in them. Nevertheless, the user of the mobile devices cannot apply the information to an appliance conveniently in that he still needs to physically connect the devices with an appliance. Furthermore, due to the compactness and the limitation of size, most mobile devices are short of storage space and processing power. Inevitably, this shortage limits the capacity of information or data that a user can store or retrieve. Besides, some mobile devices like mobile phones do not even allow applications like WinWord™ to be run on them. Therefore, users of these mobile devices are restrained from accessing documents created by these applications.

The present invention seeks to provide improvements to mobile devices.

In an embodiment of the invention, the invention provides a convenient method and apparatus to allow a user of a mobile device to apply remotely stored information to an appliance.

In an embodiment according to one aspect of the invention, in a method for applying remotely stored information to an appliance via a mobile device, the mobile device initiates the process by transmitting instructions to a computer system via a first communication network. The instructions designate the information to be processed as well as the appliance to which the information is to be applied. The information is stored in a sub-computer system. The sub-computer system is connected via a second communication network and a firewall to the computer system. The appliance is connected to the computer system via a third communication network. The sub-computer system polls the computer system for instructions and, if instructions are present, transmits the information to the computer system. According to the instructions, the computer system retrieves the information and converts the information to a document suitable for the appliance. The computer system then applies the document to the designated appliance.

According to another aspect of the invention, a computer system has a first interface for receiving instructions from the mobile device via a first communication network. The instructions designate the information to be processed and the appliance to which the designated information is to be applied. Further, the computer system has a second interface for receiving polling signals from a sub-computer system and for receiving the information sent from the sub-computer system according to the instructions. The sub-computer system is connected to the computer system via a second communication network and a firewall. The appliance is connected to the computer system at a third interface via a third communication network. The third interface sends the information to the appliance. The computer system has a server computer system for processing and storing the instructions and for receiving the designated information. The server computer system further applies the information to the appliance.

The preferred embodiments allow all devices included in the computer system, to be protected by their respective firewall, thereby providing the security that the devices may not be attacked by unauthorized inquiries too easily. Furthermore, they provide the possibility to use applications with a huge need of computing resources within a mobile device, which itself does not provide sufficient calculating resources.

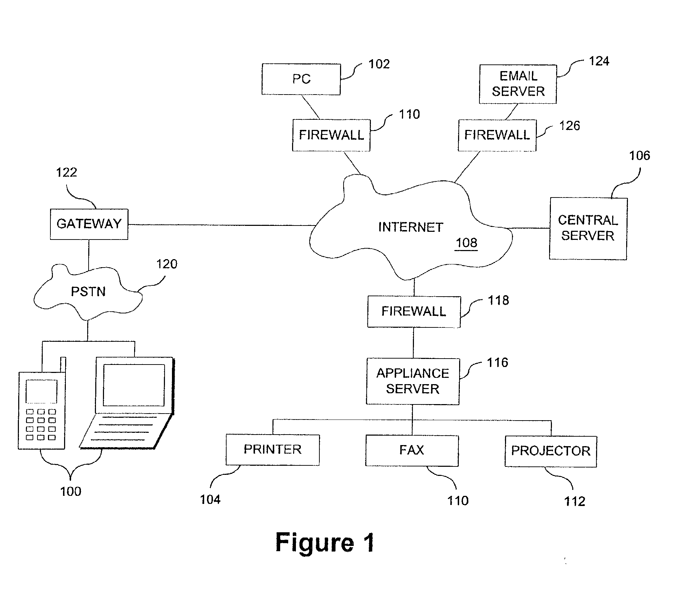

Embodiments of the present invention are described below, by way of example only, with reference to the accompanying drawing, in which Figure 1 illustrates one embodiment of system.

In one embodiment of the invention as shown in Figure 1, a user of a mobile device 100 such as a mobile phone can print documents stored in his personal computer 102 via a printer 104. To enable the user to access the documents remotely, the documents have been shared out to a central server 106 via the internet 108, that is, filenames of these documents are stored in the central server 106. While the user selects the files in the user's personal computer to be shared, a string of information is packed into an HTTP packet in an illustrative format shown below:
- HTTP header
- /MapleWML/CMServer/AddFile.asp
- Username (for identifying in the user's personal computer 102)
- User Password (for the purpose of security)
- User Entered Name (e.g., a friendly name for the file)
- File Size
- HTTP Trailer.

The parameter "User Entered Name" identifies and is associated with the actual location of the individual file to be shared. By selecting such a user-entered name (to be discussed later), the central server 106, as well as the personal computer is able to identify the file to be printed.

Such an HTTP packet then will be sent from the personal computer to the central server 106 via the internet 108. In this embodiment, upon receiving it, the central server 106 is activated by the parameter "/MapleWML/CMServer/AddFile.asp" to run a script. Thus the information following this parameter, i.e., the Username, User password, User Entered Name, and File size, will be added to a file database (not shown) of the central server 106. The file database stores the filenames of the files shared out by each user.

Further, the personal computer 102 needs to be accessible, that is, by using its Username and User Password other computers or servers can access and retrieve documents from it. The personal computer 102 is protected by a first firewall 110 against attacks, e.g., unauthorized inquiries, from the internet 108. Therefore, the central server 106 is not able to start a communication with the personal computer 102. The personal computer 102 instead periodically polls the central server 106. Given at least one filename stored in the file database of the central server 106 for the corresponding personal computer 102, the central server 106 is allowed to communicate with the personal computer 102 due to the polling action of the personal computer 102.

Additionally, a plurality of appliances, including, for example, the printer 104, a fax machine 112, and a projector 114, are connected to an appliance server 116 and are registered in the central server 106. The appliances as well as the appliance server 116 are protected by a second firewall 118 against attacks, e.g., unauthorized inquiries, from the internet 108, similar to the personal computer 102. Therefore, the central server 106 is only able to communicate with the appliance server 116 and to send documents to be applied at an individual appliance when the appliance server 116 starts communication with the central server 106. Hence, the appliance server 116 periodically polls the central server 106 and tells the central server 106 which appliances are logged in. Further, the appliance server 116 tells the central server 106 the Appliance Identities (IDs) of the individual appliances and appliance server Internet Protocol (IP) address and asks for documents to be applied to a connected appliance. The appliances get registered by the appliance server 116 which is sending the central server 106, for example, an HTTP packet in the following illustrative format:
- HTTP header
- /MapleWML/CMServer/ApplianceLogin.asp
- Appliance ID
- Password for the Appliance Server
- Appliance Server IP Address
- HTTP Trailer,
where the parameter "/MapleWML/CMServer/ApplianceLogin.asp" activates the central server 106 to run a script such that the information following this parameter in the packet will be loaded to an appliance database (not shown) of the central server 106. The parameter "Appliance ID," for example, the appliance name, identifies the appliance to be registered. The parameter "Appliance Server IP Address" helps the central server 106 to locate the appliance server 116, and further to know where the appliances are.

When the user is away from his computer 102 and wants a printed copy of his document, the user may use his mobile phone 100 to request the central server 106 for the information about those files he has shared. The request reaches the central server 106 via a Public Switched Telephone Network (PSTN) 120, a gateway 122 and the internet 108. For communication between the mobile device 100 and the gateway 122, standard telecommunication protocols such as Wireless Application Protocols (WAP) are used. It is understood that WAP is used as a transport layer protocol based on the transport layer GSM. Higher data rate transport layers such as 3G or as Telco can also be used. In the context of WAP, the mobile phone is WAP-enabled, and the request from the mobile device 100 is in the following illustrative format:
- WAP Header
- Username
- User Password
- WAP Trailer.

The gateway 122 converts the request as well as instructions (as discussed below), to an HTTP format suitable for transfer through the internet 108. Subsequently, the gateway 122 passes the request to the central server 106.

It is noted that the mobile device 100 needs to install settings for identifying the gateway 122 and the central server 106 in advance. The mobile device 100 will then be able to contact the appropriate central server 106 via the appropriate gateway 122. Such a technology is well known in the field of wireless communication.

After receiving the request, the central server 106 packs a reply in the following illustrative HTTP format:
- HTTP Header
- <Filename>
- HTTP Trailer,
   where the parameter "<Filename>" includes the user-entered-names of all the files shared out by this particular user, that is, files which are stored in the personal computer 102 and are shared out. The central server 106 further sends its reply through the established connection towards the gateway 122, which in turn would convert the reply into a WAP format for displaying on the mobile device 100.

The user selects a document to be printed and a printer 104 to which the document is to be printed via the mobile device 100. Such a selection is incorporated into an instruction, a printing instruction in the case of this embodiment, by the mobile device 100 according to the following illustrative format:
- WAP Header
- Username
- User Password
- A First Filename (user-entered-name)
- Appliance ID
- WAP Trailer.

The parameter "A First Filename" identifies the location of the document to be printed, while the parameter "Appliance ID" identifies the appliance to which the document is to be applied. In the case of printing a document, the "Appliance ID" will be the printer name of a selected printer 104.

The mobile device 100 then sends the printing instruction to the central server 106 via the PSTN 120, gateway 122, and the internet 108. After receiving such an instruction, the central server 106 stores the parameter "A First Filename" in the file database and the parameter "Appliance ID" in the appliance database. Given a polling action at the central server 106 from the personal computer 102, the central server 106 requests for the document to be uploaded from the user's personal computer 102 by sending the personal computer 102 the contents of the parameter "A First Filename" stored in the file database. The central server 106 identifies and requests the personal computer 102 according to the parameters of "Username" and "User Password."

The personal computer 102 accordingly packs the file identified by the parameter "A First Filename" into an HTTP packet, for example:
- HTTP Header
- /MapleWML/CMServer/FileUpload.asp
- Username
- User Password
- A First Filename
- Size of the file
- Job_ID
- File Content
- HTTP Trailer,
wherein the parameter "Job_ID" identifies the source of the job, especially, where the document to be printed comes from. The parameter "/MapleWML/CMServer/ FileUpload.asp" will initiate the central server 106 to retrieve the information contained therein, including the designated document which is contained in "File Content," and to store it in the appliance database.

Given a polling action at the central server 106 from the appliance server 116, the central server 106 sends the document as well as the parameter "Appliance ID" as stored in the appliance database and designated in the printing instruction, e.g., by the printer name, to the appliance server 116 via the internet 108. The central server 106 is able to locate the appliance server 116 through the parameter "Appliance Server IP Address." The appliances such as the printer 104, a fax machine 112, and a projector 114 are connected to the appliance server 116 as already mentioned above. The appliance server 116 is installed with all the necessary applications and drivers of those connected appliances, in particular, printer drivers of the connected printers 104.

The appliance server 116 converts the document to a format suitable for the designated appliance. In the present embodiment, the document is converted to a print job in a Page Descriptive Language (PDL) format. According to the printing instruction, the print job is passed to the designated printer 104 identified by the parameter "Appliance ID," e.g., the printer name. A hard copy of the document will be then generated.

Alternatively, the user can apply the document to other appliances such as the fax machine 112 or the projector 114. The user needs to designate the appliance in the instructions being sent to the central server 106 by incorporating the appropriate appliance identity into the instructions. Accordingly, the appliance server 116 converts the retrieved document to a format suitable for the designated appliance and further passes it to the' appliance.

In another embodiment according to the invention, when the user wants a printed copy of a document, the user sends the central server 106 a request in the following illustrative format:
- WAP Header
- Username
- User Password
- A First Filename
- Appliance ID
- WAP Trailer.

Thus, the central server 106 directly gets the information about the document to be retrieved, as well as the printer 104 at which the document is to be printed, without replying to and waiting for selections from the mobile device 100. In this case, the user may need to input the desired parameters "A First Filename" and "Appliance ID" manually, unless this information is already stored in the mobile device 100.

Other alternatives can be made to the above described embodiments. For example, the documents can be forwarded to and stored in the central server 106 in advance so that the central server 106 will retrieve the documents directly from its storage unit (not shown). Then, a polling action of the personal computer 102 to allow a user determined document request from the central server 106 is not necessary. The appliances can also be connected to the central server 106 directly, in which case the central server 106 also acts as appliance server 116 but without the second firewall 118.

Furthermore, the user of the mobile device 100 can apply information downloaded from the internet 108 to an appliance. In such a case, the central server 106 or the appliance server 116 downloads the information directly from the internet 108 according to the instruction from the mobile device 100.

Similarly, the user can apply emails, with or without attachment, which are stored in an email server 124 to a suitable appliance. The email server 124 may also be protected by a third firewall 126 against attacks, e.g., unauthorized inquiries, from the internet 108. The email server 124 periodically polls the central server 106. Given an appropriate user request to the central server 106, the email server 124 then applies the requested email, with or without attachment, to the designated appliance via both the central server 106 and the appliance server 116 as described above.

Alternatively, the email server 124 together with the personal computer 102 can be protected by a common firewall. Then, the personal computer 102 periodically polls the central server 106. Given an appropriate user request to the central server 106, the personal computer 102 fetches the available emails, with or without attachment, from the email server 124 and transmits the requested email, with or without attachment, to the central server 106. Finally, the central server 106 applies the email to the designated appliance as described above.

Additionally, other mobile devices 100 such as personal digital assistants can be used on condition that they are able to communicate with the gateway 122.

In the following, some alternative embodiments of the invention will be described.

In an alternative embodiment of the invention, an appliance server polls the computer system via both the third communication network and a further firewall. Then, the computer system transmits the formatted information to the appliance server via both the third communication network and the further firewall due to polling by the appliance server, if the formatted information is present in the computer system. Finally, the appliance server transmits the formatted information to the appliance according to the instructions.

In this preferred embodiment, the appliance server is formatting the information. This means that the appliance server instead of the computer system converts the information to a document suitable for the appliance.

In another embodiment of the invention, a part of the first communication network and a part of the second communication network and/or a part of the third communication network or, alternatively, a part of the second communication network and a part of the third communication network can share a part of one common communication network, for instance the internet.

A plurality of appliances may be registered in the computer system. The plurality of appliances can be connected to the computer system via the third communication network. The mobile device designates a first appliance from the plurality of appliances by specifying it in the instructions.

In this preferred embodiment, the mobile device designates the information by incorporating the location thereof in the sub-computer system into the instructions.

Furthermore, the first communication network includes a gateway with which the mobile device communicates by using standard telecommunication protocols. The gateway converts the instructions to a format, which the computer system understands. Preferably, the instructions are converted to a format suitable for transfer through the internet.

The first appliance can be a printer, a fax machine, or a projector. In one embodiment, the first appliance is a printer and the computer system converts the information to a print job in a format suitable for printing.

The mobile device may designate the information by incorporating the location thereof in the sub-computer system into the instructions such that the computer system is capable of retrieving the information.

The third interface of the computer system may receive polling signals from an appliance server protect by a further firewall. Then, the server computer system sends the information via the third communication network, via the further firewall and via the appliance server to the appliance for processing.

The server computer system may convert the information to a format suitable for the appliance.

In this embodiment, the appliance is a printer and the server computer system converts the information to a print job in a format suitable for printing on the printer.

The disclosures in Singapore patent application no. 200101251-7, from which this application claims priority, and in the abstract accompanying this application are incorporated herein by reference.

## Claims

1. A method of applying information to an appliance via both a mobile device and a computer system, the information being stored in a sub-computer system, the method including the steps of:
designating the information to be processed and the appliance to which the information is to be applied as instructions in the mobile device;
transmitting the instructions from the mobile device to the computer system via a first communication network;
polling the computer system by the sub-computer system via both a second communication network and a firewall;
transmitting the information from the sub-computer system to the computer system via the second communication network due to the polling by the sub-computer system, if the instructions from the mobile device are present in the computer system;
converting the information to formatted information suitable for the appliance according to the instructions;
transmitting the formatted information from the computer system to the appliance via a third communication network; and
applying the formatted information to the appliance for processing according to the instructions.

2. A method according to claim 1, wherein the step of transmitting the formatted information from the computer system to the appliance includes:
polling the computer system by an appliance server via both the third communication network and a further firewall;
transmitting the formatted information from the computer system to the appliance server via both the third communication network and the further firewall due to polling by the appliance server, if the formatted information is present in the computer system; and
transmitting the formatted information from the appliance server to the appliance according to the instructions.

3. A method according to claim 1 or 2, wherein the step of formatting the information is executed from an appliance server.

4. A method according to claim 1, 2 or 3, wherein a plurality of appliances is connected to the computer system, the mobile device designating the appliance among said plurality of appliances in the instructions.

5. A method according to claim 4, wherein said plurality of appliances is registered in the computer system.

6. A method according to claim 4 or 5, wherein the mobile device designates the appliance by specifying the appliance identity in the instructions.

7. A method according to any preceding claim, wherein the mobile device designates the information by incorporating the location of the information in the sub-computer system into the instructions.

8. A method according to any preceding claim, wherein the first communication network includes a gateway with which the mobile device communicates by using standard telecommunication protocols, and the gateway converts the instructions to a format which the computer system understands.

9. A method according to any preceding claim, wherein the appliance is a printer, and the computer system converts the information to a print job in a format suitable for printing.

10. A method according to claim 9, wherein the computer system converts the information to a PDL format for printing.

11. A computer system operable to allow a user of a mobile device to apply information stored in a sub-computer system to an appliance designated by the mobile device, wherein the sub-computer system and the appliance are connected to the computer system, the computer system including:
a first interface for receiving instructions from the mobile device via a first communication network, wherein the instructions designate the information to be processed and the appliance to which the information is to be applied;
a second interface for receiving polling signals from the sub-computer system and for receiving the information sent from the sub-computer system according to the instructions via a second communication network and a firewall;
a third interface for sending the information to the appliance via a third communication network; and
a server computer system connected to the first interface, the second interface and the third interface, for processing and storing the instructions, for receiving the information, and for sending the information to the appliance for processing.

12. A computer system according to claim 11, wherein the third interface receives polling signals from an appliance server protect by a further firewall, and wherein the server computer system sends the information via the third communication network, via the further firewall and via the appliance server to the appliance for processing, if the appliance server polls for information stored in the server computer system.

13. The computer system according to claim 11 or 12, wherein a part of the first communication network and a part of the second communication network and/or a part of the third communication network or, alternatively, a part of the second communication network and a part of the third communication network share a part of one common communication network.

14. A computer system according to claim 11, 12 or 13, wherein the mobile device designates the information by incorporating the location of the information into the instructions such that the sub-computer system is capable of sending the information.

15. A computer system according to any one of claims 11 to 14, wherein the server computer system converts the information to a format suitable for the appliance.

16. A computer system according to claim 15, wherein the appliance is a printer, and the server computer system converts the information to a print job in a format suitable for printing.
